# EUROPEAN PATENT APPLICATION

(11) **EP 4 822 824 A1**
(43) Date of publication of application: **14.10.2026**
(21) Application number: 26171145.1
(22) Date of filing: 08.04.2026
(51) Int. Cl.: H01M 10/613, H01M 10/625, H01M 10/6551, H01M 10/6556, H01M 10/6567, H01M 50/204

(54) **BATTERY IMMERSION COOLING APPARATUS**

(30) Priority: 09.04.2025 KR 20250046326; 08.09.2025 KR 20250127697
(71) Applicant: SK On Co., Ltd., Seoul 03161 (KR); SK Innovation Co., Ltd., Seoul 03188 (KR)
(72) Inventor: CHO, June Ho, 34124 Daejeon (KR); KIM, Se Hyeon, 34124 Daejeon (KR); KIM, Tae Hyeon, 34124 Daejeon (KR); BAE, Sun Hyuk, 34124 Daejeon (KR); LEE, Jun Young, 34124 Daejeon (KR)
(74) Representative: Prüfer & Partner mbB Patentanwälte · Rechtsanwälte

(57) **Abstract**

A battery immersion cooling apparatus according to an embodiment of the present disclosure includes a case (100) accommodating an immersion fluid and accommodating a battery cell (10) or a battery module immersed in the immersion fluid, a cooling layer (200) disposed on at least one surface of the case (100) and a heat transfer protrusion (300) formed on one side of the cooling layer (200) and configured to exchange heat with the immersion fluid.

## Description

### [BACKGROUND OF THE INVENTION]

### Technical Field

The present disclosure relates to a battery cooling apparatus, and more particularly, to a battery immersion cooling apparatus for cooling a battery cell or a battery module using an immersion method.

### Description of the Related Art

There is a demand for thermal management of lithium-ion battery packs used in Energy Storage Systems (ESS), electric vehicles, and the like.

Lithium-ion batteries may experience thermal runaway due to internal short circuits of cells, overcharging, or external impacts. This may cause a chain reaction of thermal propagation to adjacent cells, potentially leading to fire or explosion of the entire system.

Conventional air-cooling or water-cooling methods have limitations in cooling efficiency because the direct contact area with the cell surface is limited. In particular, it is difficult for these methods to respond promptly to rapid temperature rises, such as those occurring during thermal runaway reactions.

### [SUMMARY OF THE INVENTION]

Embodiments of the present disclosure may provide a battery immersion cooling apparatus capable of preventing overheating of a battery cell or a battery module and preventing the spread of thermal runaway by exchanging heat with an immersion fluid through a heat transfer protrusion and a cooling layer.

According to the present invention, there is provided a battery immersion cooling apparatus comprising: a case configured to accommodate an immersion fluid and a battery cell or a battery module immersed in the immersion fluid; a cooling layer arranged at at least one surface of the case; and a heat transfer protrusion formed on one side of the cooling layer and configured to exchange heat with the immersion fluid.

In some non-limiting embodiments, the cooling layer may be disposed separately from the case, and the heat transfer protrusion may be immersed in the immersion fluid to provide a cell upper liquid space. Alternatively, the cooling layer may be disposed inside the case, the heat transfer protrusion may be immersed in the immersion fluid, and a gas space may be formed between the cooling layer and an inner wall of the case to provide a cell upper gas space and a cell upper liquid space.

In some non-limiting embodiments, the heat transfer protrusion may be partially immersed in the immersion fluid, wherein a lower portion of the heat transfer protrusion is positioned in a cell upper liquid space, and an upper portion of the heat transfer protrusion is positioned in a cell upper gas space provided between the cooling layer and the cell upper liquid space or the cell upper gas space.

In some non-limiting embodiments, the cell upper gas space may be in fluid communication with a gas discharge unit formed on one side of the case to discharge gas generated during a thermal runaway reaction.

In some non-limiting embodiments, the cooling layer may include a cooling channel disposed in the cooling layer through which a coolant flows, a coolant supply port connected to the cooling channel may be connected to one side of the cooling layer, and a coolant recovery port connected to the cooling channel may be connected to another side of the cooling layer. The cooling channel may be formed parallel to a planar dimension of the battery cell or the battery module.

In some non-limiting embodiments, the coolant supply port and the coolant recovery port may be disposed parallel to each other in a width dimension of the cooling layer or a length dimension of the cooling layer. Alternatively, the coolant supply port may be disposed in a height dimension of the cooling layer, and the coolant recovery port may be disposed in a width dimension or a length dimension of the cooling layer, such that they are disposed perpendicular to each other.

In some non-limiting embodiments, the coolant supply port may be provided in plurality in the height dimension of the cooling layer, such that the coolant is distributed in the height dimension of the cooling layer.

In some non-limiting embodiments, the cooling layer may include a coolant supply port disposed at an upper portion of the cooling layer, and an impingement jet array disposed below the coolant supply port and configured to spray coolant toward the heat transfer protrusion. The cooling layer may further include a coolant recovery port disposed below the impingement nozzles and configured to collect the sprayed coolant.

In some non-limiting embodiments, the impingement jet array may comprise a coolant supply manifold connected to the coolant supply port, and a plurality of impingement nozzles connected to the coolant supply manifold and arranged in a width dimension of the cooling layer.

In some non-limiting embodiments, the impingement jet array may comprise a coolant supply manifold connected to the coolant supply port and disposed at a center of the cooling layer in a length dimension, and a plurality of impingement nozzles connected to the coolant supply manifold and branching to both sides from the coolant supply manifold.

In some non-limiting embodiments, the cooling layer may be formed of a plurality of module units, and may provide heat transfer protrusions having different shapes or different arrangements for each module.

In some non-limiting embodiments, the heat transfer protrusion may be formed in a shape of at least one of a fin, a rib, a wave, a mesh, a honeycomb, or a needle, and may have a surface roughness (Ra) in a range of 0.1 µm to 15 µm.

In some non-limiting embodiments, an outer surface of the case may have a heat dissipation fin structure, or the apparatus may further comprise a cooling jacket disposed on an outer periphery of the case.

In some non-limiting embodiments, by immersing a battery cell or a battery module in an immersion fluid and enabling heat exchange with an upper portion of the cell through a cooling layer, overheating of the battery cell or the battery module may be prevented, and propagation of thermal runaway may be prevented.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic view of one embodiment of a cooling layer configuration where the coolant supply port and coolant recovery port are disposed in parallel, with inwardly-projecting heat transfer protrusions. In this configuration, heat transfer protrusions extend upward from the bottom of the cooling layer.
FIG. 2 illustrates an embodiment of a parallel arrangement, similar to that of FIG. 1, of the coolant supply port and the coolant recovery port, but features outwardly-projecting heat transfer protrusions. Here, the heat transfer protrusions extend outward from the cooling layer into the immersion fluid.
FIG. 3 depicts an embodiment of a perpendicular arrangement of a cooling layer configuration, where multiple coolant supply ports are disposed in the height dimension of the cooling layer while the coolant recovery port is disposed in a width or length dimension, creating perpendicular positioning. This embodiment also uses recess-type heat transfer protrusions.
FIG. 4A is a schematic front view illustrating an embodiment of a case-separated type cooling layer where the cooling layer is positioned separately from the case. Heat transfer protrusions are immersed in the immersion fluid, providing only a cell upper liquid space. The coolant supply port and the coolant recovery port are disposed parallel to each other. This configuration facilitates maintenance work during cell replacement.
FIG. 4B is a schematic plan view illustrating an embodiment of the case-separated type cooling layer of FIG. 4A, wherein cooling channels are visible.
FIG. 4C is a schematic side view illustrating the case-separated type cooling layer of FIGS. 4A and 4B.
FIG. 5 is a schematic view illustrating an embodiment of a partial immersion configuration in which each heat transfer protrusion is only partially immersed in the immersion fluid. The lower portion of the heat transfer protrusion is positioned in the cell upper liquid space, while the upper portion is positioned in the cell upper gas space. This dual-environment structure allows heat transfer to occur simultaneously in both liquid and gas phases.
FIG. 6A is a schematic front view illustrating an embodiment of a case-integrated type cooling layer where the cooling layer is disposed inside the case rather than separately. Heat transfer protrusions are immersed in the immersion fluid, and a cell upper gas space is formed between the cooling layer and an inner wall of the case. This configuration provides both a cell upper gas space and a cell upper liquid space simultaneously. The cell upper gas space is in fluid communication with a gas discharge unit to discharge gas generated during thermal runaway reactions.
FIG. 6B is a schematic plan view illustrating the case-integrated type cooling layer of FIG. 6A, wherein cooling channels are visible.
FIG. 6C is a schematic side view illustrating the case-integrated type cooling layer of FIGS. 6A and 6B.
FIG. 7A is a schematic front view illustrating an embodiment of a case-separated type cooling layer having an impingement jet array. The impingement jet array includes a coolant supply manifold connected to the coolant supply port and multiple impingement nozzles arranged in the width dimension of the cooling layer. The nozzles spray coolant at high speed toward the heat transfer protrusion to improve heat exchange efficiency.
FIG. 7B is a schematic plan view illustrating the case-separated type cooling layer having an impingement jet array of FIG. 7A.
FIG. 7C is a schematic side view illustrating the case-separated type cooling layer having an impingement jet array of FIGS. 7A and 7B.
FIG. 8A is a schematic front view illustrating an embodiment of a case-separated type cooling layer having an impingement jet array, but differs in the manifold arrangement as compared to earlier Figures. The coolant supply manifold is disposed at the center of the cooling layer in the length dimension, and the impingement nozzles branch to both sides from the manifold. This creates a symmetrical distribution pattern along the width dimension.
FIG. 8B is a schematic plan view of the case-separated type cooling layer having an impingement jet array of FIG. 8A.
FIG. 8C is a schematic side view illustrating the case-separated type cooling layer having an impingement jet array of FIGS. 8A and 8B.
FIG. 9 is a schematic view illustrating an embodiment where the outer surface of the case is formed with heat sink fins. Multiple fins made of metallic material protrude from the outer surface to increase contact area with air and promote heat dissipation by natural convection.
FIG. 10 is a schematic view illustrating an embodiment with a thermal jacket disposed on the outer periphery of the case. The thermal jacket includes covers and internal flow paths in close contact with the case outer periphery, through which coolant circulates.

### [DETAILED DESCRIPTION OF THE INVENTION]

Hereinafter, exemplary embodiments of the present disclosure will be described in detail with reference to the accompanying drawing so that those skilled in the art may readily practice the present disclosure. As used herein, any directional terms as the terms "width dimension", "length dimension", "height dimension", "planar dimension", "upper", "lower", "front", "rear", "above", "below", "side", or the like are used with reference to the respective directions or positions indicated by reference or shown in the drawings for representing a direction or positional relationship in the given context. Specifically, the terms "upper", "lower", "above" and "below" refer to a height dimension, and the terms "front" and "rear" refer to a length dimension. Further, a planar dimension refers to a plane as indicated by reference or shown in the drawings.

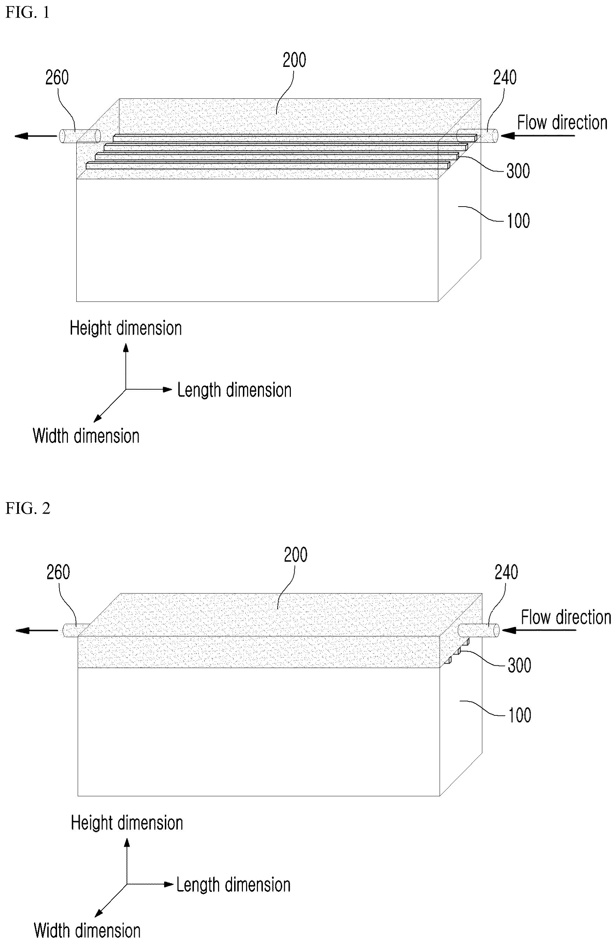

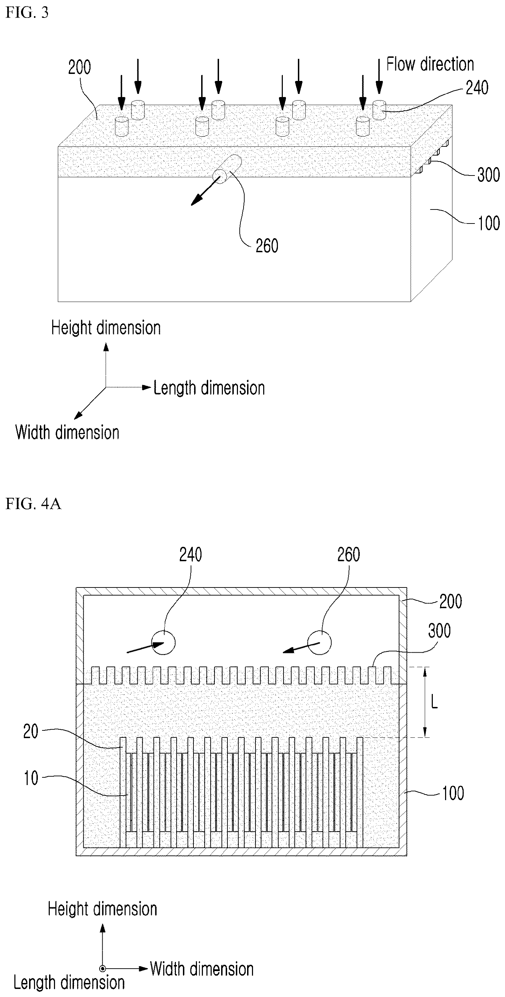

FIGS. 1-3 provide basic cooling layer configurations, wherein the coolant supply port and coolant recovery port are disposed in parallel (FIGS. 1 and 2) or perpendicularly (FIG. 3). FIGS. 1-3 also depict inwardly-projecting heat transfer protrusions (FIG. 1) and outwardly-projecting heat transfer protrusions (FIGS. 2 and 3).

FIGS. 4A-4C, 5, 6A-6C provide exemplary embodiments of various cooling channel configurations that may be utilized according to the present disclosure.

The cooling layer includes internal cooling channels 220 through which coolant flows in a parallel, planar dimension. The cooling channel is formed inside the cooling layer and provides a path through which external coolant is introduced, circulated inside the cooling layer, and then recovered. The coolant supply port 240 and coolant recovery port 260 are connected to the cooling channel at opposite sides of the cooling layer.

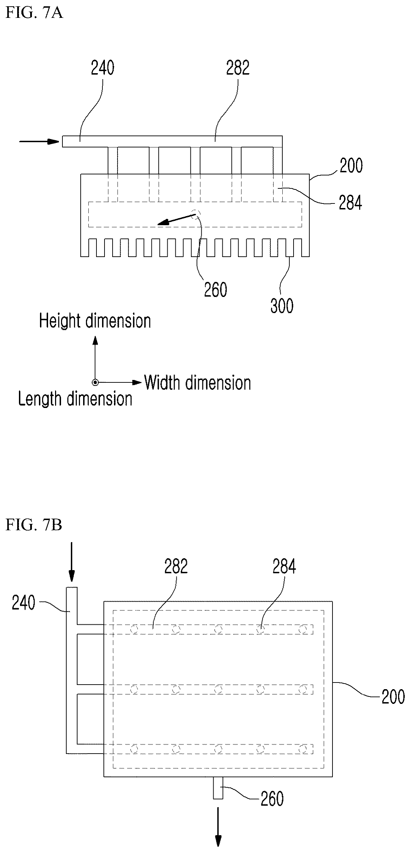

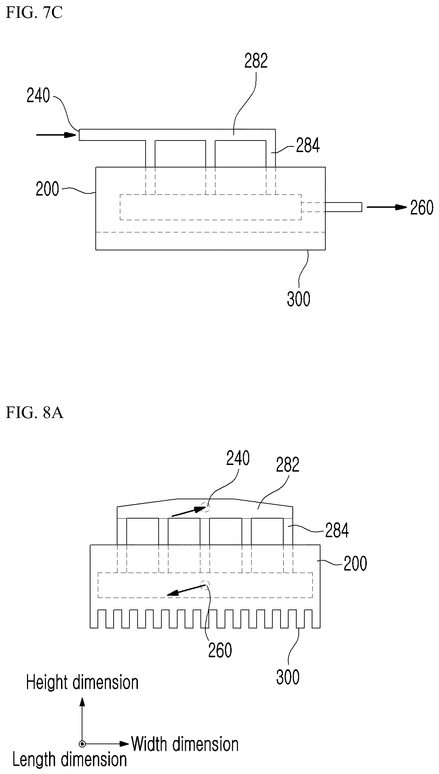

FIGS. 7A-7C, 8A-8C provide exemplary embodiments of various impingement jet array configurations that may be utilized according to the present disclosure. As an alternative, the cooling layer may include a coolant supply port disposed at an upper portion, and an impinging jet array disposed below the coolant supply port to spray coolant toward the heat transfer protrusions. This configuration uses a coolant supply port and impingement nozzles to spray coolant at high speed, rather than circulating it through internal channels.

As will be described further herein, the various embodiments and configurations disclosed herein prevent overheating and propagation of thermal runaway reactions by enabling heat exchange with the immersion fluid through the heat transfer protrusion and cooling layer. By immersing the battery in an immersion fluid and enabling heat exchange at the upper portion of the cell through the cooling layer, the apparatus can effectively suppress dangerous thermal events.

The various embodiments disclosed herein display superior cooling efficiency over conventional air-cooling or water-cooling methods limitations by providing direct, comprehensive contact between the cooling medium and the battery components. The heat transfer protrusions are strategically disposed on the upper layer flow protruding into a space where heated immersion fluid tends to stay, allowing for quick and intentional removal of residual heat from the upper layer fluid. Various protrusion shapes (fin, rib, wave, mesh, honeycomb, needle) can be selectively applied to implement an optimal heat transfer structure according to the cell position, heat generation characteristics, or flow direction of the immersion fluid. Because the direct contact area with the cell surface is expanded, cooling elements can respond promptly to rapid temperature rises such as those occurring during thermal runaway reactions.

As illustrated in the FIGS (e.g., FIG. 1), the battery immersion cooling apparatus according to an embodiment of the present disclosure may include a case 100 accommodating an immersion fluid and accommodating a battery cell 10 or a battery module immersed in the immersion fluid, a cooling layer 200 formed on at least one surface of the case 100 and a heat transfer protrusion 300 formed on one side of the cooling layer 200 and configured to exchange heat with the immersion fluid. In certain embodiments, the cooling layer includes a cooling channel through which a coolant flows. In certain embodiments, the battery is fully immersed in the immersion fluid 50. In certain embodiments, the heat transfer protrusions are positioned in a cell upper liquid space where heated immersion fluid 50 rises by natural convection. The immersion fluid, as will be recognized by one of skill in the art, may be a dielectric fluid having a dielectric breakdown strength sufficient to electrically isolate the battery cell or battery module.

The case 100 according to an embodiment of the present disclosure may be formed in an open-top structure or a sealed structure so as to accommodate the immersion fluid therein. The case 100 has a structure in which the battery cell 10 or the battery module may be accommodated in a state of being completely submerged in the immersion fluid, and may be typically formed in a rectangular or cylindrical structure. For example, the case 100 may be formed of a metal material or an insulating polymer composite material, and the cooling layer 200 for cooling the immersion fluid may be installed on one surface or a plurality of surfaces thereof.

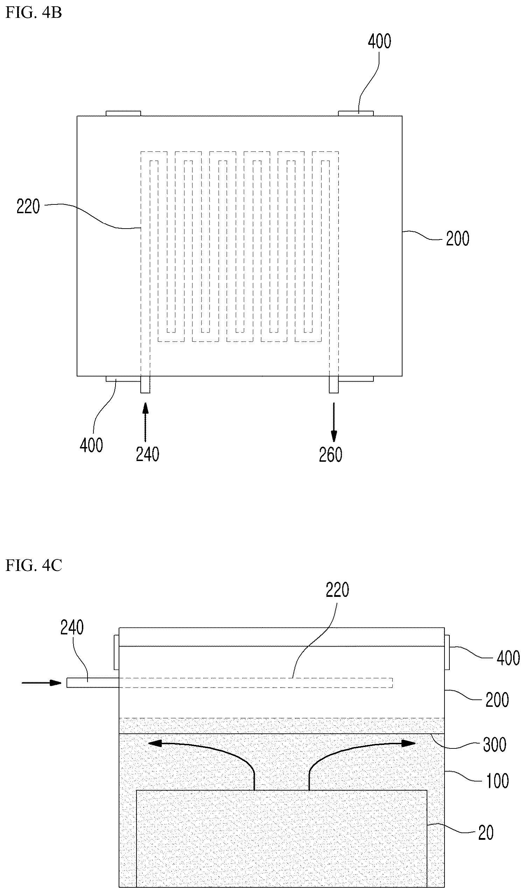

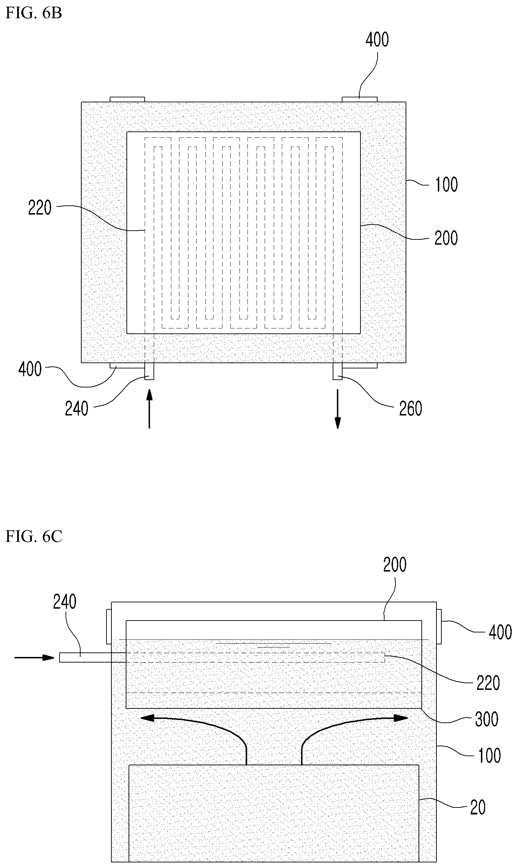

The cooling layer 200 according to an embodiment of the present disclosure is installed on at least one surface of the case 100 and mediates heat transfer between the immersion fluid inside the case 100 and an external cooling medium. The cooling layer 200 includes a cooling channel 220 (refer to FIGS. 4B and 6B) therein through which fluid can flow, and by allowing coolant to pass through, heat transferred from the immersion fluid may be discharged to the outside.

The cooling layer 200 according to an embodiment of the present disclosure includes a cooling channel 220 disposed in the cooling layer 200 through which a coolant flows. A coolant supply port 240 connected to the cooling channel 220 may be connected to one side of the cooling layer 200, and a coolant recovery port 260 connected to the cooling channel 220 may be connected to another side of the cooling layer 200.

As illustrated in FIGS. 1 to 3, according to an embodiment, the cooling layer 200 is coupled to an upper portion of the case 100 in a planar structure and induces the coolant to flow in a vertical or horizontal direction. Accordingly, the cooling layer 200 is arranged at at least one surface of the case 100 in terms of being coupled to front surfaces of the planar surfaces extending from the lower portion of the case 100 to the upper portion of the case 100 in the upper portion of the case 100. Such a cooling layer 200 may be formed of a metal (e.g., aluminum, copper) or a ceramic composite material having excellent thermal conductivity. In certain embodiments, the cooling layer is formed from aluminum, copper, and/or ceramic composite materials.

The cooling channel 220 (refer to FIGS. 4B and 6B) according to the embodiment is formed inside the cooling layer 200 and provides a path through which external coolant is introduced, circulated inside the cooling layer 200, and then recovered. The cooling channel 220 may be formed as, for example, a unidirectional or multi-directional channel, and may include a main channel and branch channels. For example, a cross-sectional shape of the cooling channel 220 may be circular, elliptical, or polygonal, and may be selected according to a heat transfer area and flow rate or flow velocity conditions.

The coolant supply port 240 according to the embodiment is coupled to one side of the cooling layer 200 and may supply coolant from an external coolant reservoir or a pump unit. According to an embodiment, a flow rate sensor or a temperature sensor may be coupled to the coolant supply port 240 to monitor cooling performance and adjust cooling conditions if necessary.

The coolant recovery port 260 according to the embodiment is coupled to another side of the cooling layer 200 and may recover the coolant, which has absorbed heat through the cooling channel 220, to the outside. According to an embodiment, the recovery port may include a backflow prevention structure, a filter, a heat exchange unit, or the like, and the recovered coolant may be repeatedly used through a cooling circulation circuit.

According to an embodiment, a port of the coolant recovery port 260 may be disposed lower than a port of the coolant supply port 240, and may be formed in an inclined structure so that air retention or bubbles do not occur in the cooling channel 220.

As described above, in the battery immersion cooling apparatus according to the embodiment of the present disclosure, the cooling layer, the cooling channel, the coolant supply port, and the coolant recovery port may effectively collect heat generated from the battery cells and transfer the heat to the outside. Furthermore, additional cooling is enabled even in an immersion cooling environment, thereby improving heat dispersion efficiency of the entire battery module.

The cooling channel 220 according to the embodiment of the present disclosure may be formed parallel to a planar dimension of the battery. Because the cooling channel is formed parallel to the broadest plane of the battery, heat exchange efficiency across the entire battery cell or module is improved. One of skill in the art will recognize various configurations that may be utilized to optimize heat transfer.

In the present disclosure, the cooling channel 220 is formed to pass through the inside of the cooling layer 200 so that heat exchange with the battery cell 10 or the battery module is performed efficiently, and may be arranged to have a predetermined directionality and area. According to an embodiment, the cooling channel 220 may be connected such that the coolant is introduced from the coolant supply port 240, and the coolant having completed heat exchange is recovered through the coolant recovery port 260.

Such a cooling channel 220 may be arranged in various ways based on the planar dimension, and may be formed by connecting a plurality of parallel channels. For example, the cooling channel 220 may be formed parallel to the planar dimension of the battery. That is, an extending direction of the cooling channel 220 may have the same or similar directionality as a plane formed based on a long side or a short side of the battery cell 10 or the battery module.

As used herein, reference to a width dimension refers to the dimension corresponding to the shortest side of the battery cell 10, and reference to a length dimension refers to the dimension corresponding to the longest side of the battery cell 10.

In the present disclosure, since the cooling channel 220 is formed to be distributed on a plane corresponding to a width dimension or a length dimension of the battery cell 10, cooling through the heat transfer protrusion 300 may be uniformly performed over the entire outer circumference of the cell as much as possible.

For example, when the battery cells 10 are stacked upright, the cooling channel 220 is formed in a horizontal direction to flow along a position close to an upper surface or a lower surface of each cell, thereby further enhancing heat exchange with the heat transfer protrusion 300. Specifically, in the case of a pouch-type battery cell 10, the cooling channel 220 may be formed parallel to a long side direction of the battery cell 10.

As described above, according to the embodiment of the present disclosure, since the cooling channel is formed parallel to the planar dimension of the battery, heat exchange efficiency in the entire battery cell or battery module may be improved.

The location of the coolant supply port and coolant recovery ports is not particularly limited. In certain embodiments, the coolant supply port 240 and the coolant recovery port 260 according to the embodiment of the present disclosure may be disposed parallel to each other in a width dimension of the cooling layer 200 or a length dimension of the cooling layer 200.

The coolant supply port 240 is configured to supply coolant to the cooling channel 220 formed inside the cooling layer 200, and is disposed at an inlet side of the cooling layer 200. The coolant recovery port 260 is configured to discharge the coolant, which has been introduced from the coolant supply port 240 and flowed along the cooling channel 220 to complete heat exchange, to the outside, and is disposed at an outlet side of the cooling layer 200. The coolant supply port 240 and the coolant recovery port 260 determine a flow direction of the cooling channel 220 and facilitate smooth circulation of the coolant inside the cooling layer 200.

In an embodiment, the coolant supply port 240 and the coolant recovery port 260 may be disposed parallel in the width dimension or the length dimension of the cooling layer 200 on a plane of the cooling layer 200, that is, based on a direction in which the battery cell 10 or the battery module is seated. The width dimension is a direction based on a short side of the battery cell 10, and the length dimension is a direction based on a long side of the cell. Such a parallel arrangement on the plane maintains a constant flow of the coolant and enables uniform distribution and recovery of the coolant throughout the cooling channel 220, thereby securing a balance of cooling efficiency.

In the embodiment arranged in the length dimension (refer to FIGS. 1 and 2), the coolant supply port 240 and the coolant recovery port 260 are disposed at a front and a rear of the cooling layer 200, respectively, and the coolant is introduced from the front and discharged to the rear, or moves in reverse.

In the embodiment arranged in the width dimension, the coolant supply port 240 and the coolant recovery port 260 are formed on both left and right sides of the cooling layer 200, respectively, and the coolant is introduced from the left and flows to the right, or flows in reverse. Also, the coolant is introduced from the left and discharged in the same direction, or flows in reverse (refer to FIGS. 4A to 4C, FIG. 5, and FIGS. 6A to 6C). Such direction setting may be selected according to an arrangement structure of the battery cell 10 or the battery module.

As described above, since the coolant supply port and the coolant recovery port according to the embodiment of the present disclosure are disposed parallel to each other in the width dimension or the length dimension of the cooling layer, efficient heat exchange with the heat transfer protrusion may be performed throughout the cooling layer, thereby minimizing temperature deviation between cells and maintaining a thermal balance of the battery module.

In other embodiments, wherein coolant supply port and coolant recovery port are not installed in the same width-length plan, such as shown in FIG. 3, a plurality of coolant supply ports 240 according to an embodiment of the present disclosure are disposed in a height dimension or top of the cooling layer 200, and the coolant recovery port 260 is disposed such that flow through the coolant recovery port is substantially perpendicular to flow of the coolant through the coolant supply ports 240.

According to an embodiment, the coolant supply port 240 may be provided in plurality in the height dimension of the cooling layer 200, so that the coolant may be distributed in the height dimension of the cooling layer 200. As illustrated in FIG. 3, the coolant is evenly supplied in a planar dimension of the cooling layer 200 by the plurality of coolant supply ports 240, and the coolant is recovered to the coolant recovery port 260 formed in a direction perpendicular thereto (the width dimension or the length dimension of the cooling layer 200).

As described above, by disposing the coolant supply port and the coolant recovery port in directions perpendicular to each other according to the embodiment of the present disclosure, the coolant is uniformly distributed over the entire cooling layer, and local flow imbalance or a heat concentration phenomenon may be prevented.

The heat transfer protrusion 300 according to an embodiment of the present disclosure is formed on one side, e.g., an internally facing side, of the cooling layer 200, and is intended to increase a surface area of the cooling layer 200 and increase a heat exchange area with the immersion fluid. The heat transfer protrusion 300 according to an embodiment is formed to protrude in an outward direction or an inward direction of the cooling layer 200, and may be entirely or partially in contact with the immersion fluid.

That is, the heat transfer protrusion 300 according to the embodiment of the present disclosure is disposed in an upper flow layer where the immersion fluid, whose temperature has risen after cooling the cell, tends to stay, and may be densely disposed at an upper portion to quickly and effectively remove residual heat of the upper layer fluid.

The heat transfer protrusion 300 according to an embodiment of the present disclosure may be formed in a shape of at least one of a fin, a rib, a wave, a mesh, a honeycomb, or a needle. The shape of the heat transfer protrusion 300 may be formed as a single shape, or may be formed by combining different shapes as necessary.

The fin shape is formed as a protruding pillar shape having a predetermined length, and may be a cylinder or a polygonal prism shape. The fins may be arranged in a vertical direction or an inclined direction, and may be evenly disposed or arranged in a concentrated manner at a center. The rib shape is a long plate-shaped protrusion, and may induce formation of a flow path through parallel or crossing arrangement, and control directionality of a flow of the coolant. The wave shape is formed as a curved protrusion, and may increase a heat transfer coefficient by inducing turbulent flow through a wavy surface.

The mesh shape is a structure in which a plurality of thin pins or thread-shaped structures are arranged to cross each other in a lattice or net shape, and can secure a high surface area. The honeycomb shape is formed in a hexagonal or regular polygonal cell structure, and can secure structural rigidity and heat transfer performance. The needle shape is a needle-like structure having a sharp tip, is used for the purpose of penetrating heat exchange and reduction of flow resistance, and may be generally formed in a partially exposed, non-immersed arrangement in which a part thereof remains above a liquid level in consideration of an immersion depth.

As described above, according to the embodiment of the present disclosure, by selectively applying heat transfer protrusions of various shapes, an optimal heat transfer structure may be implemented according to a position of the cell, heat generation characteristics, or a flow direction of the immersion fluid.

According to an embodiment of the present disclosure, the heat transfer protrusions 300 may further be treated to impart a surface roughness (Ra) and further increase surface area and therefore heat transfer. Surface roughness also enhances turbulent flow in a boundary layer with the immersion fluid and increases a heat transfer coefficient.

For example, heat transfer protrusions 300 may be formed with a surface roughness in a range of about 0.1 µm to about 15 µm. Preferably, it may be formed in a range of about 1 µm to about 10 µm, and more preferably in a range of about 3 µm to about 7 µm. As used herein, the term "about" refers to values within 10% of the named value.

The surface roughness (Ra) according to the embodiment is defined as an arithmetic average roughness value of a surface and is measured in micrometers (µm). When the roughness is less than 0.1 µm, the effect of roughness is insignificant. When it exceeds 15 µm, turbulent flow formation of the fluid increases, but flow resistance typically increases, which may lead to a decrease in cooling efficiency and a higher possibility of bubble formation. Therefore, in an embodiment of the present disclosure, the range of 0.1 µm to 15 µm is set as an optimal roughness range, preferably 1 µm to 10 µm, and more preferably 3 µm to 7 µm. This may have effects of bubble detachment, wettability with the coolant, and enhancement of heat transfer.

According to an embodiment, the heat transfer protrusion 300 is formed as a cylindrical fin, is formed of an aluminum alloy-based metal material, and is processed to have a surface roughness of 5 µm through sandblasting or anodizing (oxide film treatment). Also, it may be implemented as a needle-shaped heat transfer protrusion 300 having a surface roughness of 5 µm. The roughness forms fine irregularities on the surface to increase a contact area with the coolant, and induces turbulent flow in a boundary layer with the immersion fluid, thereby increasing a heat transfer coefficient.

As described above, the embodiment of the present disclosure includes the heat transfer protrusion in direct contact with the immersion fluid cooling the battery cell or the battery module, thereby improving heat exchange performance between the cooling layer and the immersion fluid. Through this, thermal runaway of the battery may be suppressed, and discharge of high-temperature gas may be induced.

As stated herein, the heat transfer protrusions may be variously shaped and may be incorporated into the cooling layer in a variety of manners. For example, FIG. 1 illustrates a structure of the upper cooling layer 200 in the battery immersion cooling apparatus according to an embodiment of the present disclosure, wherein the coolant supply port 240 and the coolant recovery port 260 are disposed in parallel, and a recessed-type heat transfer protrusion 300 is formed.

FIG. 2 illustrates a structure of the upper cooling layer 200 in the battery immersion cooling apparatus according to an embodiment of the present disclosure, wherein the coolant supply port 240 and the coolant recovery port 260 are disposed in parallel, and a raised-type heat transfer protrusion 300 is formed.

FIG. 3 illustrates a structure of the upper cooling layer 200 in the battery immersion cooling apparatus according to an embodiment of the present disclosure, wherein a plurality of coolant supply ports 240 and the coolant recovery port 260 are disposed perpendicularly, and a raised-type heat transfer protrusion 300 is formed.

FIG. 4A is a schematic front view illustrating a case-separated type cooling layer structure in the battery immersion cooling apparatus according to an embodiment of the present disclosure. FIG. 4B is a schematic plan view illustrating a case-separated type cooling layer structure in the battery immersion cooling apparatus according to an embodiment of the present disclosure. FIG. 4C is a schematic side view illustrating a case-separated type cooling layer structure in the battery immersion cooling apparatus according to an embodiment of the present disclosure.

As illustrated, according to an embodiment of the present disclosure, the cooling layer 200 is arranged in a structure separated from the case 100, and the heat transfer protrusion 300 is immersed in the immersion fluid, thereby providing a cell upper liquid space L. If necessary, the cooling layer 200 may be selectively installed on an upper portion, a side portion, or a lower portion of the case 100.

According to the embodiment of FIGS. 4A to 4C, the cooling layer 200 is positioned at an upper portion of the case 100, and the coolant supply port 240 and the coolant recovery port 260 are formed parallel to each other on the same side of the cooling layer 200. Such a case-separated cooling layer structure may facilitate work via the cooling layer during cell replacement and maintenance of the immersion cooling apparatus.

According to an embodiment, the heat transfer protrusion 300 is formed on one side of the separated cooling layer 200 and may be immersed in the immersion fluid accommodated inside the case 100. That is, it provides only the cell upper liquid space L. The heat transfer protrusion 300 immersed in the immersion fluid is disposed at a position adjacent to an upper portion of the battery cell 10 or the battery module, and induces heat exchange with high-temperature immersion fluid or gaseous fluid introduced along a heat rising path.

The cell upper liquid space L according to an embodiment of the present disclosure is a predetermined space secured above the cells inside the case 100, where the immersion fluid is filled up to an upper portion, and the heat transfer protrusion 300 may be immersed. The cell upper liquid space L may not only increase a heat exchange area but also provide a buffer space capable of inducing temporary accumulation and transfer of gas or high-temperature fluid generated at an upper end of the cell arrangement.

Such a cell upper liquid space L may form a circulation flow path for the immersion fluid or be utilized as an upward discharge path for high-temperature gas, and may provide stable thermal management performance even under natural convection or external forced convection conditions in a state of being combined with the cooling layer 200 and the heat transfer protrusion 300.

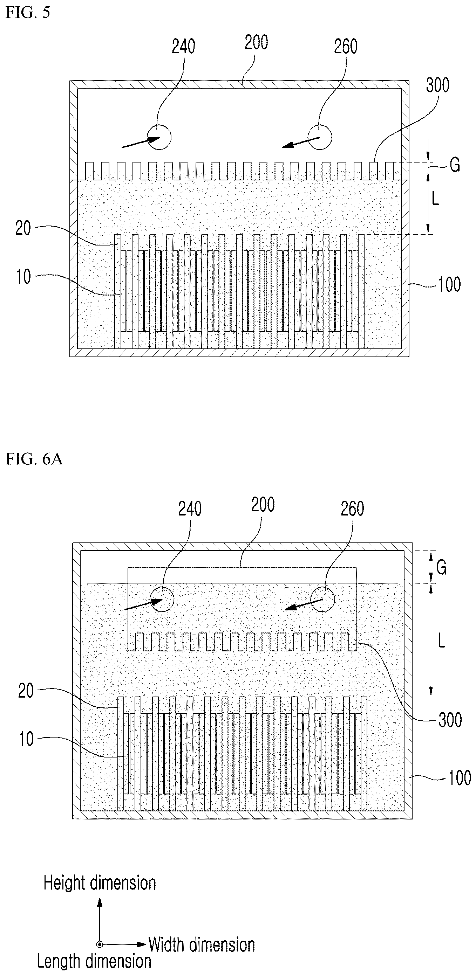

FIG. 5 is a schematic view illustrating a structure in which a part of a heat transfer protrusion 300 is immersed in an immersion fluid in the separate type cooling layer structure in the battery immersion cooling apparatus according to an embodiment of the present disclosure.

As illustrated in FIG. 5, according to an embodiment of the present disclosure, the cooling layer 200 is disposed in a structure separated from the case 100, the heat transfer protrusion 300 is partially immersed in the immersion fluid, a lower portion of the heat transfer protrusion 300 may be positioned in the cell upper liquid space L, and an upper portion of the heat transfer protrusion 300 may be positioned in the cell upper gas space G.

Also, the structure in which the heat transfer protrusion 300 is partially immersed may be provided even in a case-integrated cooling layer structure inside the case 100.

That is, heat transfer is allowed to occur simultaneously in a dual environment of a liquid phase and a gas phase. Such a structure allows the high-temperature gas to be discharged quickly while enabling heat exchange with the high-temperature gas through an upper surface of the heat transfer protrusion 300. Furthermore, the cell upper gas space G reduces a linear velocity of the high-temperature gas to minimize an amount of splashed immersion fluid, and heat exchange with the immersion fluid may be induced through a lower surface of the heat transfer protrusion 300.

According to an embodiment, a fin-type heat transfer protrusion 300 is formed on a lower side of the cooling layer 200. About 60% of a height of each heat transfer protrusion 300 is immersed in the immersion fluid, that is, the cell upper liquid space L, and the remaining 40% may be exposed in the cell upper gas space G.

The heat transfer protrusion 300 according to the embodiment of the present disclosure is disposed on an upper flow layer where the immersion fluid, whose temperature has risen after cooling the cell, tends to stay. Fine bubbles generated at a gas-liquid interface can be easily detached due to turbulence around the heat transfer protrusion 300 and an interface breaking effect. In this case, when a needle-shaped heat transfer protrusion 300 is selected, wettability is improved due to a capillary effect, and bubbles can be removed more efficiently.

This makes it possible to secure the cell upper gas space G by only adjusting a level of the immersion fluid, enables removal of residual heat in the upper layer part and suppression of bubbles, and may be advantageous for a module having a low C-rate and thus not requiring a high amount of heat.

As described above, according to the embodiment of the present disclosure, the cooling layer 200 is installed separately from the case 100, and the heat transfer protrusion is partially immersed across the cell upper liquid space L and the cell upper gas space G, so that heat exchange with both the high-temperature gas and the immersion fluid may be performed. Accordingly, heat generated in the upper portion of the battery cell 10 is efficiently removed through both the immersion fluid and the gas, and a retention space and a discharge path for the high-temperature gas are formed, thereby improving an effect of preventing propagation of thermal runaway.

FIG. 6A is a schematic front view illustrating a case-integrated type cooling layer structure in the battery immersion cooling apparatus according to an embodiment of the present disclosure. FIG. 6B is a schematic plan view illustrating a case-integrated type cooling layer structure in the battery immersion cooling apparatus according to an embodiment of the present disclosure. FIG. 6C is a schematic side view illustrating a case-integrated type cooling layer structure in the battery immersion cooling apparatus according to an embodiment of the present disclosure.

As illustrated, according to an embodiment of the present disclosure, the cooling layer 200 is disposed inside the case 100, the heat transfer protrusion 300 is immersed in the immersion fluid, and a cell upper gas space G is formed between the cooling layer 200 and an inner wall of the case 100, thereby providing the cell upper gas space G and a cell upper liquid space L.

The battery immersion cooling apparatus according to the embodiment of the present disclosure disposes the cooling layer 200 inside the case 100 accommodating the immersion fluid, thereby providing a more direct and closer heat exchange path compared to a case where a cooling structure is installed outside the case 100.

The cooling layer 200 is disposed in an internal space where the battery cell 10 or the battery module is accommodated in an immersed state, and may be fixed to one surface or a plurality of surfaces inside the case 100 or installed via a support. Accordingly, the cooling layer 200 is arranged at at least one surface of the case 100 in terms of being fixed to one surface or a plurality of surfaces inside the case 100 or installed via a support. At this time, the entire or a part of the cooling layer 200 is disposed at a position spaced apart from the inner wall of the case 100, and a gas space may be formed according to such a spaced arrangement. The heat transfer protrusion 300 is formed on one side of the cooling layer 200, and the heat transfer protrusion 300 may be disposed in a state of being immersed in the immersion fluid.

According to the spaced structure between the cooling layer 200 and the inner wall of the case 100 according to an embodiment, the cell upper gas space G where high-temperature gas generated from an upper portion of the cell can stay is formed. At the same time, since the heat transfer protrusion 300 is disposed in a state of being immersed in the immersion fluid, the cell upper liquid space L is also provided. Therefore, since the cell upper gas space G and the cell upper liquid space L are formed simultaneously, heat generated from the cell is efficiently removed, and retention and discharge of high-temperature gas are induced, thereby preventing propagation of thermal runaway.

The cell upper gas space G according to an embodiment of the present disclosure is in fluid communication with a gas discharge unit 400 formed on one side of the case 100, so that gas generated during a runaway reaction can be discharged.

The cell upper gas space G is a fluid space formed above the battery cell 10, and is formed in an upper region not reached by the immersion fluid. In an embodiment of the present disclosure, a region where the immersion fluid is filled and a space where gas stays above it are distinguished based on the upper portion of the cell inside the case 100. This cell upper gas space G may act as a retention space where high-temperature gas generated during heat generation or a runaway reaction of the cell temporarily stays. The temporarily retained high-temperature gas is discharged to the outside through the gas discharge unit 400 in fluid communication with the cell upper gas space G.

As described above, according to the embodiment of the present disclosure, since the cell upper gas space G is in fluid communication with the gas discharge unit 400, the high-temperature gas generated during the runaway reaction is quickly discharged to the outside, and pressure rise inside the battery system can be prevented.

Also, by reducing thermal energy of the high-temperature gas through contact with the heat transfer protrusion 300 before gas discharge, a temperature of the discharged gas can be reduced, thereby minimizing a possibility of a secondary explosion.

As illustrated in FIGS. 7A to 7C and FIGS. 8A to 8C, the cooling layer according to an embodiment of the present disclosure may include a coolant supply port 240 disposed at an upper portion, and an impingement jet array disposed below the coolant supply port 240 to spray coolant toward the heat transfer protrusion.

The impingement jet array according to an embodiment of the present disclosure is installed below the coolant supply port 240, so that the coolant may be sprayed toward the heat transfer protrusion. In an embodiment of the present disclosure, the impingement jet array is implemented through a spray nozzle, and the coolant may be sprayed vertically or obliquely toward the heat transfer protrusion.

FIG. 7A is a schematic front view illustrating a case-separated type cooling layer having an impinging jet cooling channel structure in the battery immersion cooling apparatus according to an embodiment of the present disclosure. FIG. 7B is a schematic plan view illustrating a case-separated type cooling layer having an impinging jet cooling channel structure in the battery immersion cooling apparatus according to an embodiment of the present disclosure. FIG. 7C is a schematic side view illustrating a case-separated type cooling layer having an impinging jet cooling channel structure in the battery immersion cooling apparatus according to an embodiment of the present disclosure.

As illustrated in FIGS. 7A to 7C, the impingement jet array may include a coolant supply manifold 282 connected to the coolant supply port 240, and a plurality of impingement nozzles 284 connected to the coolant supply manifold 282 and arranged in a width dimension of the cooling layer 200.

The impingement jet array is connected to the coolant supply port 240 and may spray the coolant supplied from the coolant supply port 240 at high speed to improve heat exchange efficiency with the heat transfer protrusion.

The coolant supply manifold 282 according to an embodiment is connected to the coolant supply port 240 to receive the coolant, and provides uniform flow distribution to the impingement nozzles 284. The coolant supply manifold 282 efficiently distributes a flow rate to the plurality of nozzles while maintaining pressure of the coolant. An inlet of the coolant supply manifold 282 connected to the coolant supply port 240 is formed on one side, and outlets respectively connected to the plurality of impingement nozzles 284 are formed on another side.

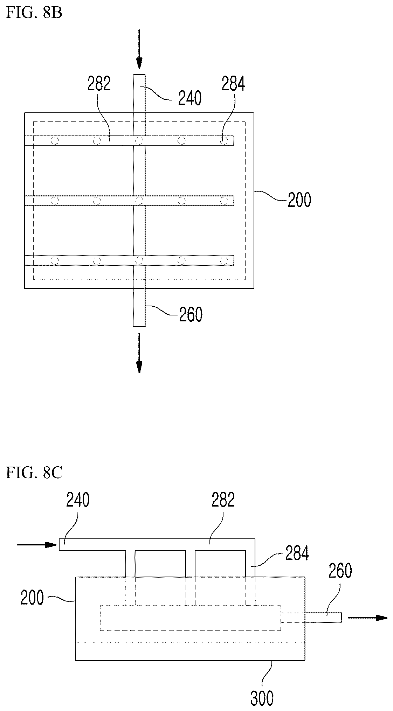

The impingement nozzles 284 according to an embodiment are connected between the coolant supply manifold 282 and coolant receiver (the rectangle indicated by a dotted line below the impingement nozzles 284 in FIG. 7A) and are arranged at predetermined intervals along the width dimension of the cooling layer 200. Each impingement nozzle 284 sprays the coolant at high speed in a downward or inclined direction to increase a heat transfer speed between the heat transfer protrusion and the coolant. The coolant sprayed from the impingement nozzles (284) can be discharged to the coolant recovery unit (260) through the coolant receiver. During the coolant stays or moves in the coolant receiver, heat transfer can occur between the heat transfer protrusion located below the coolant receiver and the coolant contained in the coolant receiver. FIG. 8A is a schematic front view illustrating a case-separated type cooling layer 200 having an impinging jet cooling channel structure in the battery immersion cooling apparatus according to an embodiment of the present disclosure. FIG. 8B is a schematic plan view illustrating a case-separated type cooling layer having an impinging jet cooling channel structure in the battery immersion cooling apparatus according to an embodiment of the present disclosure. FIG. 8C is a schematic side view illustrating a case-separated type cooling layer having an impinging jet cooling channel structure in the battery immersion cooling apparatus according to an embodiment of the present disclosure.

As illustrated in FIGS. 8A to 8C, the impingement jet array may include a coolant supply manifold 282 connected to the coolant supply port 240 and disposed at a center of the cooling layer 200 in a length dimension, and a plurality of impingement nozzles 284 connected to the coolant supply manifold 282 and branching to both sides from the coolant supply manifold 282 in the width dimension.

The coolant supply manifold 282 according to an embodiment is disposed at the center of the cooling layer 200 in the length dimension, receives the coolant from the coolant supply port 240, and distributes the coolant to the plurality of impingement nozzles 284.

The plurality of impingement nozzles 284 are coupled to the coolant supply manifold 282, and may spray the coolant supplied from the coolant supply manifold 282 at high speed in a downward or diagonal direction. According to an embodiment, the impingement nozzles 284 are arranged symmetrically along a width dimension of the cooling layer 200, and may have the same diameter and angle, or may be formed in an asymmetric shape according to a thermal load distribution.

As described above, the impingement jet array according to the embodiment of the present disclosure sprays the coolant onto the heat transfer protrusion 300 of the cooling layer 200, thereby improving cooling performance in a local heat concentration region that is difficult for the immersion fluid to reach.

According to an embodiment of the present disclosure, the cooling layer 200 may include a coolant recovery port 260 disposed below the impingement nozzles 284 and configured to collect the sprayed coolant.

The coolant recovery port 260 according to an embodiment is disposed below the impingement nozzles 284, and the coolant sprayed at high speed from the impingement nozzles 284 may be transferred to the outside or a circulation system through the coolant recovery port 260.

The cooling layer according to an embodiment of the present disclosure may be formed of a plurality of module units, and may provide heat transfer protrusions 300 having different shapes or different arrangements for each module.

The plurality of cooling layer modules may each include heat transfer protrusions 300 of different shapes or different arrangements. For example, different protrusion shapes (e.g., a fin type for a first module, a rib type for a second module, and a needle type for a third module) may be applied for each module, or protrusions of the same shape may be applied but with different arrangement directions or densities (e.g., linear arrangement, diagonal arrangement, cross arrangement, etc.). These may be appropriately combined according to a usage environment, a cell position, a cooling demand, etc.

Through this, effects such as mitigation of local heat concentration in an immersion cooling environment, heat dispersion during a runaway reaction, and improvement of cell lifespan may be obtained, and it may be applied to various battery pack environments.

At least one gas discharge unit 400 configured to discharge gas generated during a battery thermal runaway reaction to the outside may be formed on one side of the case 100 according to an embodiment of the present disclosure. This is to prevent damage to the case 100 and propagation of thermal runaway due to an internal pressure rise, and to safely discharge high-temperature gas to the outside.

The gas discharge unit 400 may include a valve structure, a filter structure, or a one-way discharge structure. For example, it may include a structure such as a rupture disk (or burst disk), a safety valve, a filter structure, or a differential pressure operated opening, and a plurality of gas discharge units 400 may be formed at specific positions of the case 100 as necessary.

The gas discharge unit 400 according to an embodiment may be formed in a structure in which heat resistance and pressure resistance are secured, considering that gas generally generated during a battery runaway reaction has a high temperature of about 700°C to 1100°C and a pressure condition of several hundred kPa or more. For example, a rupture disk made of an aluminum alloy is designed to automatically open at a set pressure of 300 kPa, and a heat-resistant silicone gasket is inserted into an outer periphery of the disk to maintain sealing with the case 100.

According to an embodiment, the gas discharge unit 400 is in fluid communication with the cell upper gas space G, so that gas generated during the runaway reaction can be quickly discharged.

According to an embodiment, the gas discharge unit 400 may be positioned on one side of an upper portion of the case 100, for example, above the cooling layer 200 on which the heat transfer protrusion 300 is formed.

Also, a plurality of gas discharge units 400 may be distributed and disposed in different directions, and even when any one of the plurality of gas discharge units 400 is inoperable, a remaining discharge path can be secured.

In some embodiments, a thermally activatable opening/closing cap is installed on an opening of the gas discharge unit 400 to be automatically opened under a temperature condition of 180°C or higher, thereby enabling an initial response in the event of a battery fire or thermal runaway.

As described above, according to the embodiment of the present disclosure, when a runaway reaction occurs in a battery cell 10 or a battery module, high-temperature and highpressure gas inside the inner case is quickly and safely discharged to the outside, thereby preventing rupture of the case or heat transfer to adjacent cells, and blocking propagation of thermal runaway within the entire system.

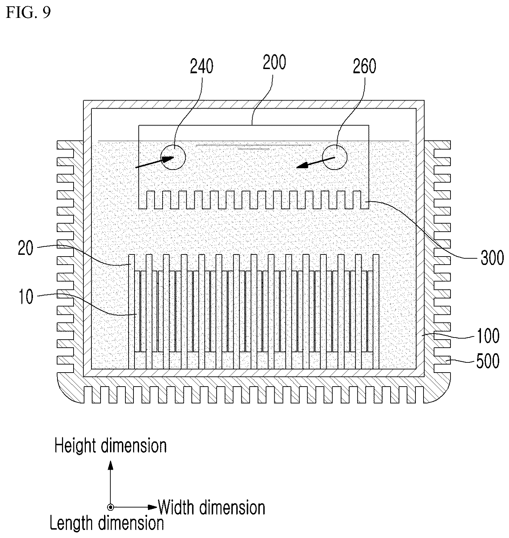

FIG. 9 is a schematic view illustrating a structure of heat dissipation fins formed on an outer surface of a case in the battery immersion cooling apparatus according to an embodiment of the present disclosure.

As illustrated, the outer surface of the case 100 according to an embodiment of the present disclosure may be formed with a structure of heat dissipation fins 500 structure.

The structure of heat dissipation fins 500 according to an embodiment of the present disclosure is configured in a shape in which a plurality of heat dissipation fins 500 formed of a metal material protrude from the outer surface of the case 100. The plurality of heat dissipation fins 500 are arranged at predetermined intervals to increase a contact area with air and promote heat dissipation by natural convection.

The structure of heat dissipation fins 500 according to the embodiment may be uniformly distributed on the entire outer wall of the case 100, or may be locally disposed in a specific high-heat region (e.g., an upper portion of the coolant recovery port 260, a vicinity of the coolant supply port 240, etc.).

According to an embodiment, a shape of the heat dissipation fin 500 may have various cross-sectional structures such as a rectangular, circular, rib-type, or wing-type shape, and an aluminum alloy, a copper (Cu) alloy, stainless steel, or the like having excellent thermal conductivity may be used.

As described above, the structure of heat dissipation fins 500 on the outer surface of the case 100 according to the embodiment of the present disclosure provides an additional heat dissipation path on the outer surface of the case 100 in addition to cooling by the immersion fluid and the cooling layer 200, thereby improving heat dissipation capability of the entire battery immersion cooling apparatus and preventing propagation of thermal runaway.

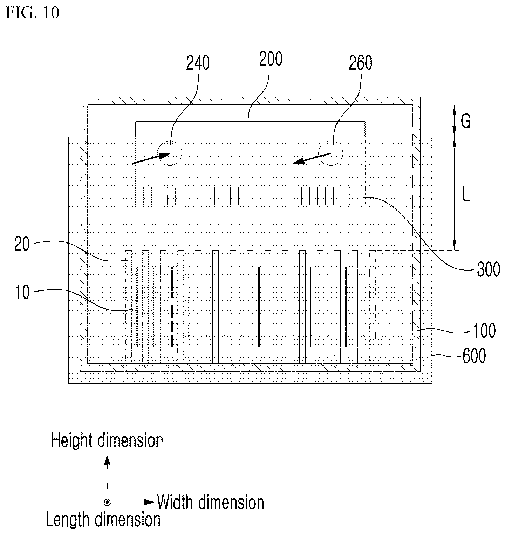

FIG. 10 is a schematic view illustrating a cooling jacket structure formed on an outer periphery of a case in the battery immersion cooling apparatus according to an embodiment of the present disclosure.

As illustrated, a cooling jacket 600 may be included on an outer periphery of the case 100 according to an embodiment of the present disclosure.

The cooling jacket 600 includes a plurality of covers and internal flow paths installed to be in close contact with the outer periphery of the case 100, and coolant may circulate through the flow paths. At this time, the coolant is supplied from an external coolant supply port, absorbs heat through the internal flow paths, and may then be recovered to the external coolant recovery port 260. The cooling jacket 600 may have a structure surrounding the entire case 100, or may be limitedly installed only on some high-temperature parts.

The cooling jacket 600 according to an embodiment may be formed of a metal material having excellent thermal conductivity, such as aluminum or copper.

According to an embodiment, the cooling jacket 600 and the case 100 are closely fixed by a thermally conductive adhesive or fixing bolts, and a sealing rubber for preventing fluid leakage may be attached to an edge thereof.

As described above, the cooling jacket 600 on the outer periphery of the case according to the embodiment of the present disclosure adds an external cooling structure that operates independently of immersion cooling, thereby improving cooling performance of the entire battery immersion cooling apparatus and preventing of thermal runaway propagation.

According to the embodiment of the present disclosure, by immersing a battery cell 10 or a module in an immersion fluid and enabling heat exchange with an upper portion of the battery cell 10 through a cooling layer 200, overheating of the battery cell 10 or the battery module may be prevented, and propagation of thermal runaway may be prevented.

According to the embodiment of the present disclosure, the heat transfer protrusion 300 contacts the immersion fluid to improve heat transfer performance of the cooling layer 200, thereby suppressing thermal runaway of the battery and inducing discharge of high-temperature gas.

As described above, the present disclosure may contribute to securing thermal stability of ESS and electric vehicle battery systems through improvement of heat transfer performance, induction of high-temperature gas discharge, and activation of natural convection.

## Claims

1. A battery immersion cooling apparatus comprising:
a case (100) configured to accommodate an immersion fluid and a battery cell (10) or a battery module immersed in the immersion fluid;
a cooling layer (200) arranged at at least one surface of the case (100); and
a heat transfer protrusion (300) formed on one side of the cooling layer (200) and configured to exchange heat with the immersion fluid.

2. The apparatus of claim 1, wherein the cooling layer (200) is disposed separately from the case (100), and the heat transfer protrusion (300) is immersed in the immersion fluid to provide a cell upper liquid space (L).

3. The apparatus of claim 1, wherein the cooling layer (200) is disposed inside the case (100), the heat transfer protrusion (300) is immersed in the immersion fluid, and a gas space is formed between the cooling layer (200) and an inner wall of the case (100) to provide a cell upper gas space (G) and a cell upper liquid space (L).

4. The apparatus of any one of claim 2 or 3, wherein the heat transfer protrusion (300) is partially immersed in the immersion fluid, a lower portion of the heat transfer protrusion (300) is positioned in the cell upper liquid space (L), and an upper portion of the heat transfer protrusion (300) is positioned in a cell upper gas space (G) provided between the cooling layer (200) and the cell upper liquid space according to claim 2 or the cell upper gas space (G) according to claim 3.

5. The apparatus of any one of claims 1 to 4, wherein the cooling layer (200) includes a cooling channel (220) disposed in the cooling layer (200), through which a coolant flows, a coolant supply port (240) connected to the cooling channel (220) is connected to one side of the cooling layer (200), and a coolant recovery port (260) connected to the cooling channel (220) is connected to another side of the cooling layer (200),
wherein the cooling channel (220) is formed parallel to a planar dimension of the battery cell (10) or the battery module.

6. The apparatus of claim 5, wherein the coolant supply port (240) and the coolant recovery port (260) are disposed parallel to each other in a width dimension of the cooling layer (200) or a length dimension of the cooling layer (200), or the coolant supply port (240) is disposed in a height dimension of the cooling layer (200), and the coolant recovery port (260) is disposed in a width dimension or a length dimension of the cooling layer (200),
wherein the coolant supply port (240) and the coolant recovery port (260) are disposed perpendicular to each other.

7. The apparatus of claim 6, wherein the coolant supply port (240) is provided in plurality in the height dimension of the cooling layer (200), such that the coolant is distributed in the height dimension of the cooling layer (200).

8. The apparatus of any one of claims 5 to 7, wherein the coolant supply port (240) is disposed at an upper portion of the cooling layer (200); and the cooling layer (200) includes an impingement jet array disposed below the coolant supply port (240) and configured to spray coolant toward the heat transfer protrusion.

9. The apparatus of claim 8, wherein the impingement jet array comprises a coolant supply manifold (282) connected to the coolant supply port (240); and a plurality of impingement nozzles (284) connected to the coolant supply manifold (282) and arranged in a width dimension of the cooling layer (200).

10. The apparatus of claim 8, wherein the impingement jet array comprises: a coolant supply manifold (282) connected to the coolant supply port (240) and disposed at a center of the cooling layer (240) in a length dimension; and a plurality of impingement nozzles (284) connected to the coolant supply manifold (282) and branching to both sides from the coolant supply manifold (282).

11. The apparatus of claim 9 or 10, wherein the coolant recovery port (260) is disposed below the impingement nozzles (284) and configured to collect the sprayed coolant.

12. The apparatus of any one of claims 1 to 11, wherein the cooling layer (200) is formed of a plurality of module units, and provides heat transfer protrusions (300) having different shapes or different arrangements for each module.

13. The apparatus of any one of claims 1 to 12, wherein the heat transfer protrusion (300) is formed in a shape of at least one of a fin, a rib, a wave, a mesh, a honeycomb, or a needle, and/or
wherein the heat transfer protrusion (300) has a surface roughness (Ra) in a range of 0.1 µm to 15 µm.

14. The apparatus of any one of claims 1 to 13, wherein at least one gas discharge unit (400) is formed on one side of the case (100) and configured to discharge gas generated during a battery thermal runaway reaction to the outside,
wherein the at least one gas discharge unit (400) is in fluid communication with the cell upper gas space (G).

15. The apparatus of any one of claims 1 to 14, wherein an outer surface of the case (100) has a structure of heat dissipation fins (500), or wherein a cooling jacket (600) is disposed on an outer periphery of the case (100).
